# EUROPEAN PATENT APPLICATION

(11) **EP 0 546 801 A2**
(43) Date of publication of application: **16.06.1993**
(21) Application number: 92311179.3
(22) Date of filing: 08.12.1992
(51) Int. Cl.: G06F 15/403, G06F 15/419

(54) **Apparatus for graphically displaying information contained in a data base**

(30) Priority: 09.12.1991 US 803875
(71) Applicant: International Business Machines Corporation, Armonk, N.Y. 10504 (US)
(72) Inventor: Erwin-Grotsky, George Paul, Austin, Texas 78723 (US); Li, Shih-Gong, Austin, Texas 78750 (US); Shrader, Theodore J.L., Austin, TX 78728 (US)
(74) Representative: Burt, Roger James, Dr.

(57) **Abstract**

The present invention relates to apparatus for displaying information contained in a data base comprising storage means for storing the data base information, display apparatus for displaying icons relating to the data base, and a control system for controlling the display of icons on the display apparatus.

According to the invention the apparatus is characterised in that the control system comprises means for constructing an icon (200) representing a selected item of data stored in the storage means and representing certain attributes (210 - 224) of the selected data, and means for displaying the constructed icon.

According to another aspect of the invention the apparatus is characterised in that the control system comprises means for modifying a selected item of data by accessing the item of data through the constructed icon representing the item of data.

## Description

This invention generally relates to apparatus for graphically displaying information contained in a data base and for modifying such information.

Databases have become the subject of significant interest, not only because of the increasing volume of data being stored and retrieved by computerised databases but also by virtue of the data relationships which can be established during the storage and retrieval processes. Most of the interest in databases has concerned users' demands for an improved ergonomic interface to the database through innovative display technology.

A recent innovation to improve the ergonomic interface to a knowledge-base system is disclosed in US -A- 4,813,013. This patent reveals an interactive, rule-based system which allows icons to be selectively tied to particular rule definitions. The stored rules are cross-referenced to the icon to which they pertain, so that whenever the icon is selected by a problem solving user for use in building a problem solution, the rules pertaining thereto are accessed and applied.

Article 31150 in Research Disclosure, March 1990, entitled Icons in the headings of Columnar Lists discloses another example of an ergonomic advance in user interfaces for databases. This article discusses a facility to allow icons to appear in the heading area of a columnar list. For example, fields such as security level can have a header that is an icon and looks like a lock.

Article 30781 in Research Disclosure, November 1989, entitled Iconic Fields, discloses icons that can be selectively opened to reveal detailed information concerning the field and its contents. Then, when the user has adjusted the detailed information, the field can be deselected and returned to an icon.

The object of the present invention is to provide improved apparatus for graphically displaying information contained in a data base and for modifying such information.

The present invention relates to apparatus for displaying information contained in a data base comprising storage means for storing the data base information, display apparatus for displaying icons relating to the data base, and a control system for controlling the display of icons on the display apparatus.

According to the invention the apparatus is characterised in that the control system comprises means for constructing an icon representing a selected item of data stored in the storage means and representing certain attributes of the selected data, and means for displaying the constructed icon.

According to another aspect of the invention the apparatus is characterised in that the control system comprises means for modifying a selected item of data by accessing the item of data through the constructed icon representing the item of data.

According to one embodiment of the invention an algorithm in the memory of a processor is used to implement the invention. The processor accesses data structures in the data base to determine the current status of a database table and displays the information stored in the database table concerning a particular column via a single column icon with dynamic visual attributes. A user can also select a column icon to open a dialogue box of detailed information relating to the particular column or key. The dialogue box enables the user to directly manipulate particular aspects of the database. Alternatively, a user can drag a column icon to another area/icon and drop the column icon there to invoke a function. The iconic representation provides concise, visual information indicating the relationships and visually coaches a user to select the appropriate information to satisfy a user's requirements.

In order that the invention may be more readily understood an embodiment will now be described with reference to the accompanying drawings, in which:
Figure 1 is a block diagram of a personal computer system in which the embodiment to be described can be implemented,
Figure 2 depicts an iconic display of database table column information in accordance with the embodiment to be described,
Figure 3 depicts a first set of data structures for creating a graphic display of information in accordance with the embodiment to be described,
Figure 4 depicts a second set of data structures for creating a graphic display of information in accordance with the embodiment to be described,
Figure 5 schematically depicts a data structure used to create a graphic display of database information in accordance with the embodiment to be described,
Figure 6 is a flow diagram of a first part of the detailed logic used in the embodiment to be described,
Figure 7 is a flow diagram of a second part of the detailed logic used in the embodiment to be described,
Figure 8 is a flow diagram of a third part of the detailed logic used in the embodiment to be described,
Figure 9 is a flow diagram of a fourth part of the detailed logic used in the embodiment to be described,
Figure 10 is a flow diagram of a fifth part of the detailed logic used in the embodiment to be described,
Figure 11 is a flow diagram of a sixth part of the detailed logic used in the embodiment to be described, and
Figure 12 is a flow diagram of a seventh part of the detailed logic used in the embodiment to be described.

### Detailed Description Of The Invention

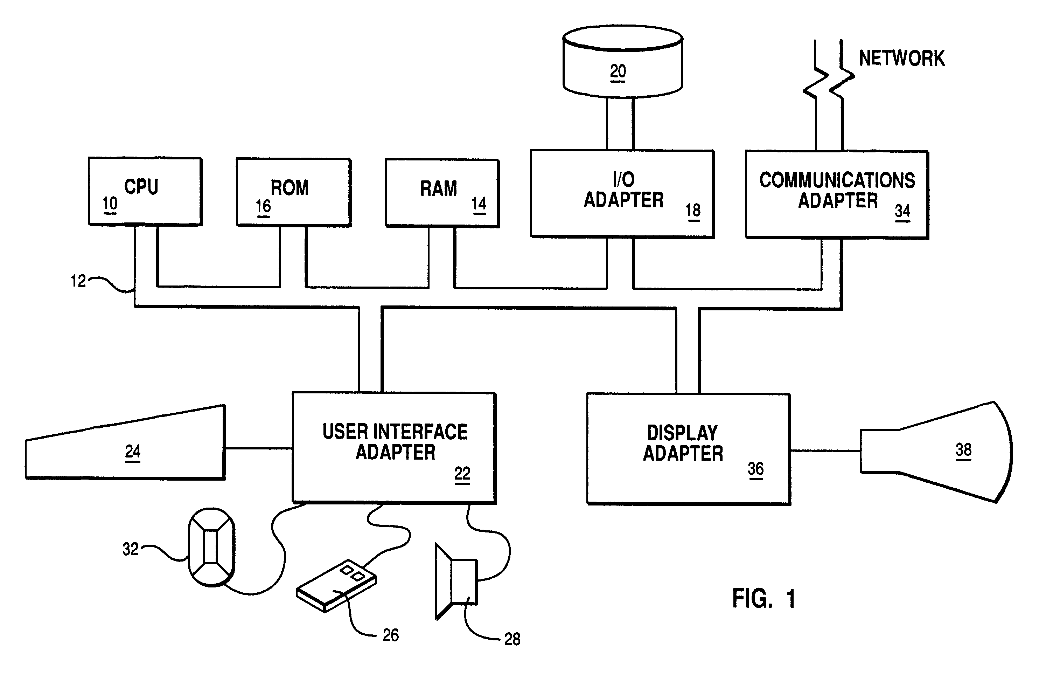

The invention is preferably practised in the context of a relational database such as is available with Database Manager in the Extended Services software program available from International Business Machines Corporation (IBM). A representative computer system environment is depicted in Figure 1, which illustrates a typical hardware configuration of a workstation having a central processing unit 10, such as a conventional microprocessor, and a number of other units interconnected via a system bus 12. The workstation shown in Figure 1 includes a Random Access Memory (RAM) 14, Read Only Memory (ROM) 16, an I/O adapter 18 for connecting peripheral devices such as disk units 20 to the bus, a user interface adapter 22 for connecting a keyboard 24, a mouse 26, a speaker 28, a microphone 32, and/or other user interface devices such as a touch screen device (not shown) to the bus, a communications adapter 34 for connecting the workstation to a data processing network and a display adapter 36 for connecting the bus to a display device 38.

The workstation has resident thereon the IBM OS/2 base operating system and the aforementioned IBM Database Manager relational database program. Preexisting queries formulated in classical SQL (Structured Query Language) format are to be conveyed to the workstation and subjected to conversion into visual or graphical iconic information for display on graphic display 38. The user thereafter interfaces to the database via the graphic display and dynamically views the results of any changes to the database information on the graphic display. The reader is referred to the IBM publication SQL REFERENCE, S04G-1012 (1991) for a detailed description of statements in the Structured Query Language (SQL). The SQL REFERENCE publication is incorporated by reference in its entirety.

A database is a collection of information stored in a computer. The data is arranged as rows in tables which represent groups of related information. A database may contain one or more tables. Structured Query Language (SQL) is an established set of statements that can be used to manage information that is stored in a database. By using these statements, a user can add, delete or update information in a table or request information from one or more tables in the form of a report. SQL performs operations on the tables to access the information within them without the user needing to know how the data is physically stored.

Referential integrity refers to the rules that govern some of the relationships within a database. Referential integrity is established by adding referential constraints to table and column definitions of a database. A referential constraint defines the rules for a relationship between a parent table and a dependent table. A parent table is the table containing the primary key that defines the relationships with a foreign key in another table. A table can be a parent in any number of relationships.

A primary key is a column or an ordered collection of columns whose values uniquely identify a row. To be unique, this collection of values cannot be duplicated in any other row. A primary key need not have a dependent foreign key.

A foreign key is one or more columns in a table whose values match the values of a primary key of a table. A foreign key is used to establish a relationship with a primary key for the purpose of enforcing referential integrity among tables. A referential constraint is an assertion that non-null values of a foreign key are valid only if they exist as values of the primary key in a parent table.

A dependent table is a table containing the foreign key that defines the relationship. A table can be a dependent in a number of relationships.

User interfaces for database tables typically shield users from a complete table definition at one time. Users are given specific subsets of the database information to view at a given time, such as column definitions or the primary key definition. The user is not given an effective method for drawing relationships between the columns and keys in the table without opening additional windows or panels.

The embodiment being described presents information about database tables in the form of icons with dynamic attributes. This gives the user of the workstation a global sense of the structure of the various tables and helps to enhance understanding of the implications of dropping a key or deleting an uncommitted column. Columns are uncommitted if the table to which the column belongs has not been committed to the database or if the column belongs to changes that were made to a table that has not been committed. Committed columns cannot be deleted from a database table.

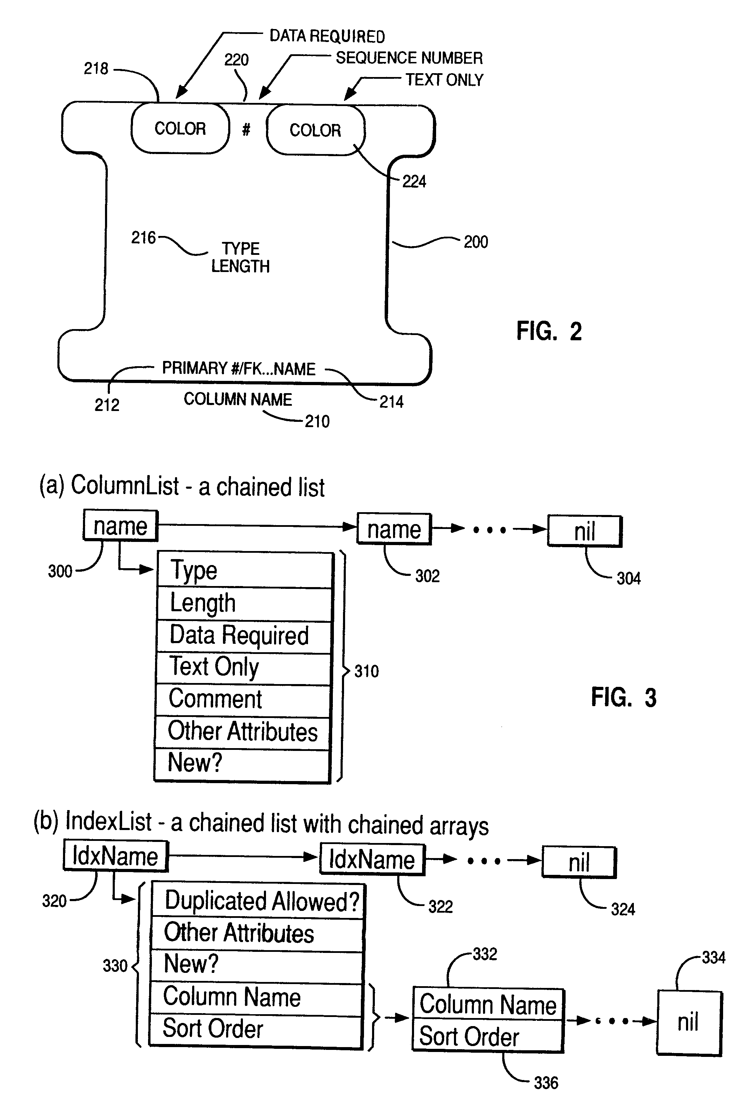

A user of the workstation is presented with an icon having various data areas embedded graphically in and around the icon representing a column from a table as depicted in Figure 2. The column icon 200 is in the shape of a column which is appropriate as the information displayed on the icon relates to a column of a database table. The column icon shows the many attributes of a column without requiring a user to invoke an explicit command to obtain the information. If a column has a data required 218 or a text only 224 attribute, then the appropriate colour bar areas are coloured accordingly. Alternatively, a different text font or shading could be used to communicate the information to a user.

The column sequence number 220 is positioned between the data required area 218 and the text only area 224. The column type and length fields 216 are presented in the middle of the column icon 200 if a type and length has been entered in the data structure for the particular column icon 200. If a column belongs to a primary key, then PRIMARY# 212 will appear with the # replaced by the column's sequence in the key. Foreign key name 214 contains a list of the names of foreign keys to which the particular column belongs. If the list of names is too long to be displayed in the icon, an ellipse is displayed at the end of the area to signify the existence of additional names. The column name 210 of the particular column appears below the icon column 200.

A user is able to view the details concerning the definitions of a particular column by double-clicking on a particular column icon with a mouse button. For example, if a user positions the cursor over a particular column icon 200, and double-clicks the mouse button, then a dialogue box appears with detailed information relating to the particular column represented by the column icon 200. One of ordinary skill in the art will readily comprehend that a user can change the information for a column and have the changes reflected back into the database.

The data structures and detailed logic used in the embodiment being described are set forth commencing with Figure 3. A set of data structures is used to organise the information utilised for the embodiment. The first of the data structures is called ColumnList 300. Each entry in ColumnList has a unique name 300 and fields descriptive of the particular table column 310. The column names are chained together as indicated at 300, 302, ... 304 until a nil pointer 304 is encountered.

The second data structure is called IndexList 320. The IndexList is a collection of index names and information associated with each of the index names 330. The information includes chained arrays of column names 332, ... 334 including the order that the columns are sorted in 336. Indexes can also be represented in the same manner as foreign key names on the icon since there can be more than one index per table in the database.

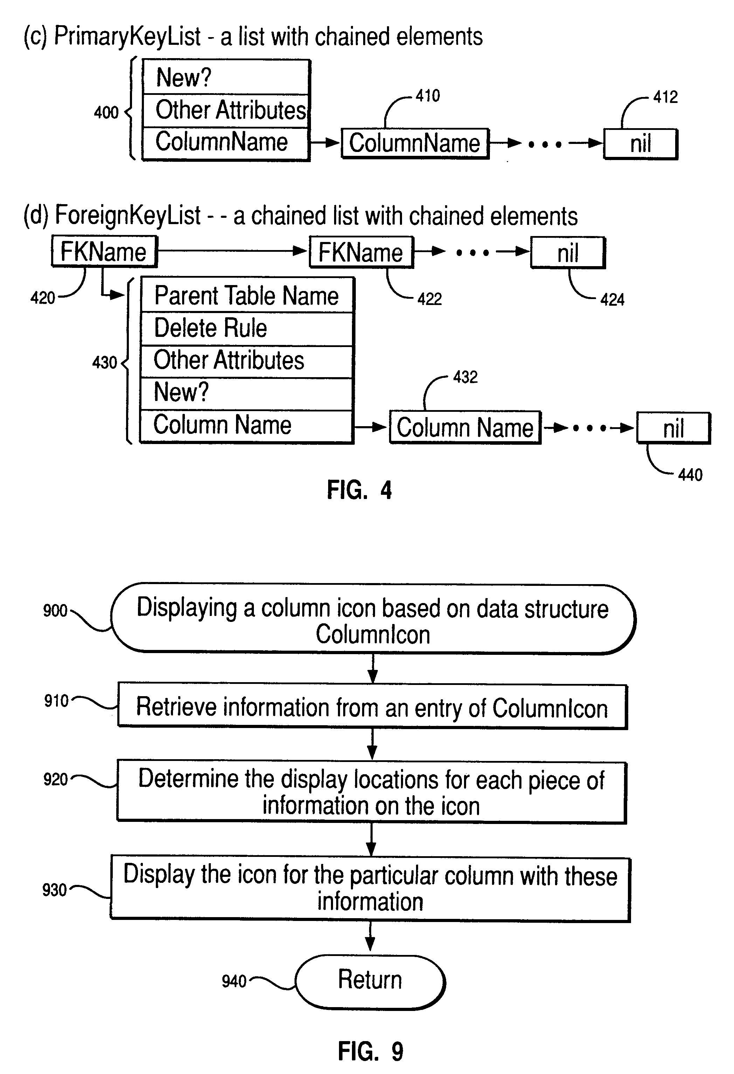

The third data structure is called PrimaryKeyList 400 in Figure 4. The data structure contains a list of chained elements defining the primary key and the columns that the keys are associated with 410, ... 412. ForeignKeyList 420 is another data structure containing ForeignKey names 420, 422, ... 424 and information associated with the names 430. The information associated with the names includes a chained list of ColumnNames 432, ... 440 associated with the particular ForeignKeyName 420.

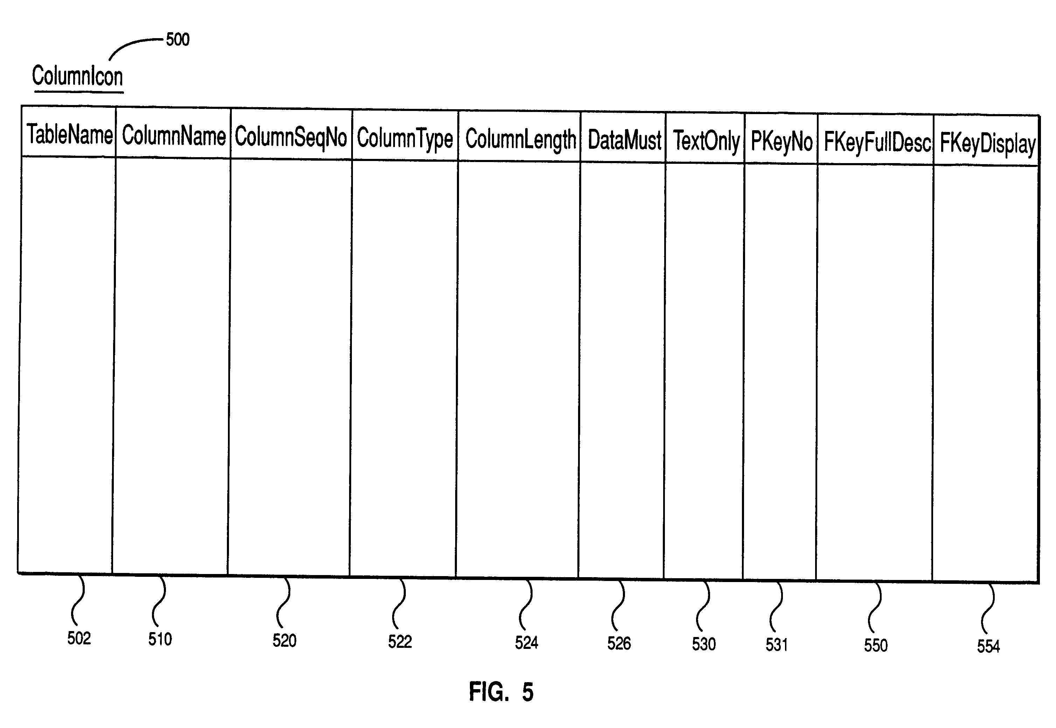

Figure 5 is an example of a ColumnIcon data structure used to correlate information concerning a particular table in a database 500. Columns are provided for TableName 502, Column Name 510, Column Sequence Number 520, Column Type 522, Column Length 524, Data Must 526, Text Only 530, Primary Key number 531, Foreign Key Description 550 and Foreign Key Display 554. The information is employed in the embodiment being described to relate various fields from an existing database into information that can be utilised for a concise display of pertinent information to a user.

Each row entry in the ColumnIcon data structure 500 of Figure 5 describes a column in a specific database table. ColumnName 510, ColumnSeqNo 520, ColumnType 522, ColumnLength 524, DataMust 526 and TextOnly 530 can be retrieved directly from the data structure ColumnList 300 of Figure 3.

Pkeyno 531 is the sequence number of a particular column in the primary key definition. If this particular column is not specified in the primary key definition, then its Pkeyno entry will be set equal to a value of NULL. The determination of Pkeyno 531 for a particular column is accomplished by comparing its ColumnName against the column names in the data structure PrimaryKeyList.

FKeyFullDesc 550 is a text string describing ail of the foreign keys with which the particular column is correlated. The foreign key names in this description are obtained by matching the particular column's ColumnName in data structure ColumnIcon with the ColumnName(s) of each list under FKName 420 of Figure 4 in data structure ForeignKeyList.

FKeyDisplay 554 is a text string obtained from Fkeyfulldesc. It contains text for display in the foreign key information area of the particular column icon. If the size of the foreign key information area cannot display the entire Fkeydisplay, an ellipse appears at the end of FKeyDisp 554 to indicate that the additional information does not appear.

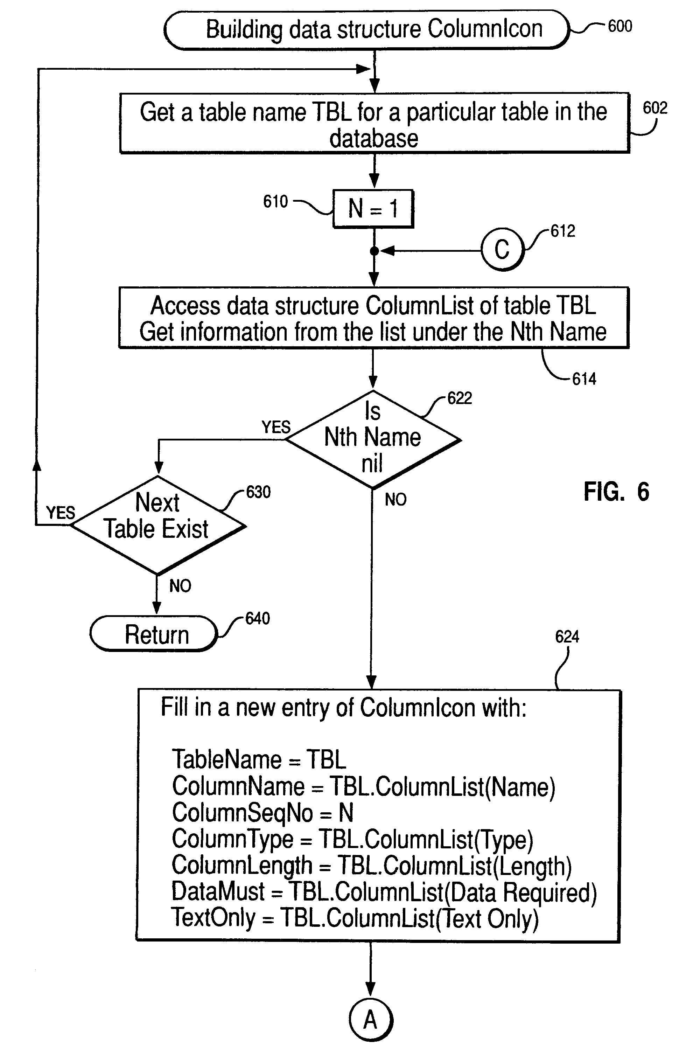

Figure 6 is the first flow chart setting forth the detailed logic used in the embodiment being described. Control commences with a ColumnIcon data structure being opened for a particular table in an existing database as shown in function block 600, a table name is obtained as set forth in function block 602, and an index N being initialised to one as shown in function block 610. A label 612 is necessary for later transfer of control logic. Then, at function block 614, N is used as an index into data structure ColumnList 300 of Figure 3 to obtain information concerning the Nth Name in the ColumnList 300 data structure. If the Nth Name is equal to the nil value in decision block 622, then at decision block 630 a test is performed to determine if another table exists. If another table exists, then control returns to function block 602 for further processing. However, if ail tables have been processed, then control is returned at terminal block 640.

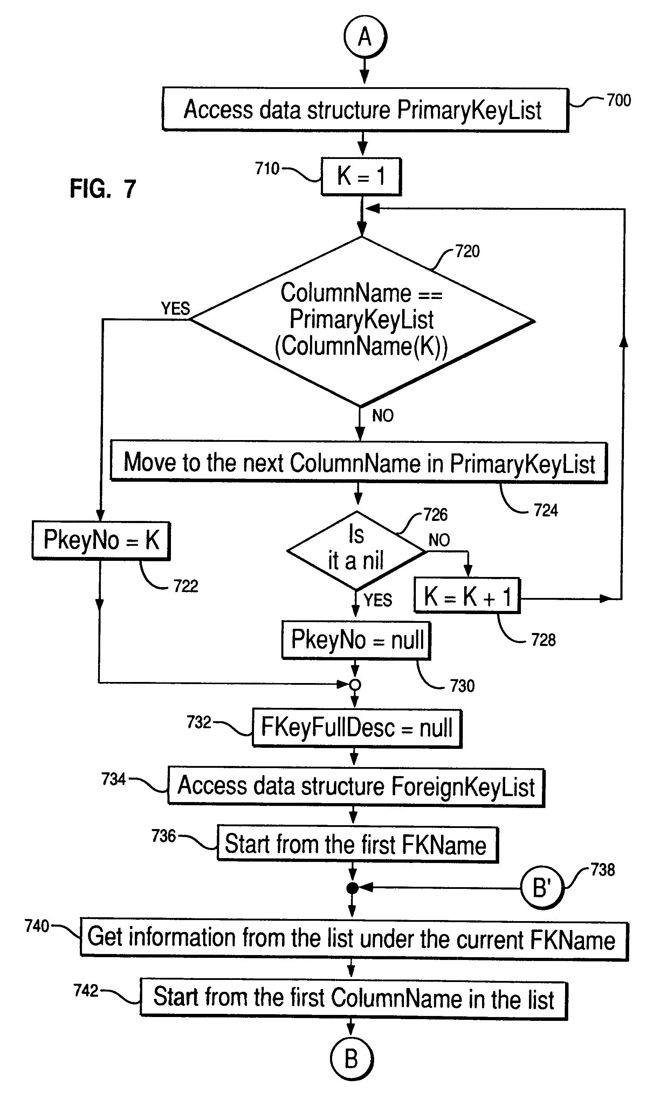

If the Nth Name is not equal to the nil value in decision block 622, then as set forth in function block 624, a new entry is built in ColumnIcon utilising the information from the ColumnList data structure for the Nth item, and control passes to Figure 7.

Figure 7 picks up the logic at 700 where the data structure PrimaryKeyList is accessed and index key K is initialised to one as set forth in function block 710. Then, a test is performed at decision block 720 to determine if a match of column names has been located. If a match is detected, then primary key number is set equal to K as shown in function block 722 and control flows to function block 732. If a match is not detected, then the next ColumnName in the PrimaryKeyList data structure is obtained in function block 724 and a test is performed to determine if its value is nil in decision block 726. If it is not nil, then index key K is incremented in function block 728 and control passes to decision block 720. If it is nil, then Pkeyno is set equal to a null value at function block 730 and control flows to function block 732.

The next step sets Fkeyfulldesc to a null value at function block 732. Then the ForeignKeyList data structure is accessed at function block 734 and the first Foreign Key name is accessed in function block 736. A label is hung at 734 for later use in controlling the flow of logic. In function block 740 the information from the list in the chain associated with Foreign Key name is obtained and the ColumnName associated with the list is used for the commencement of additional processing at function block 742.

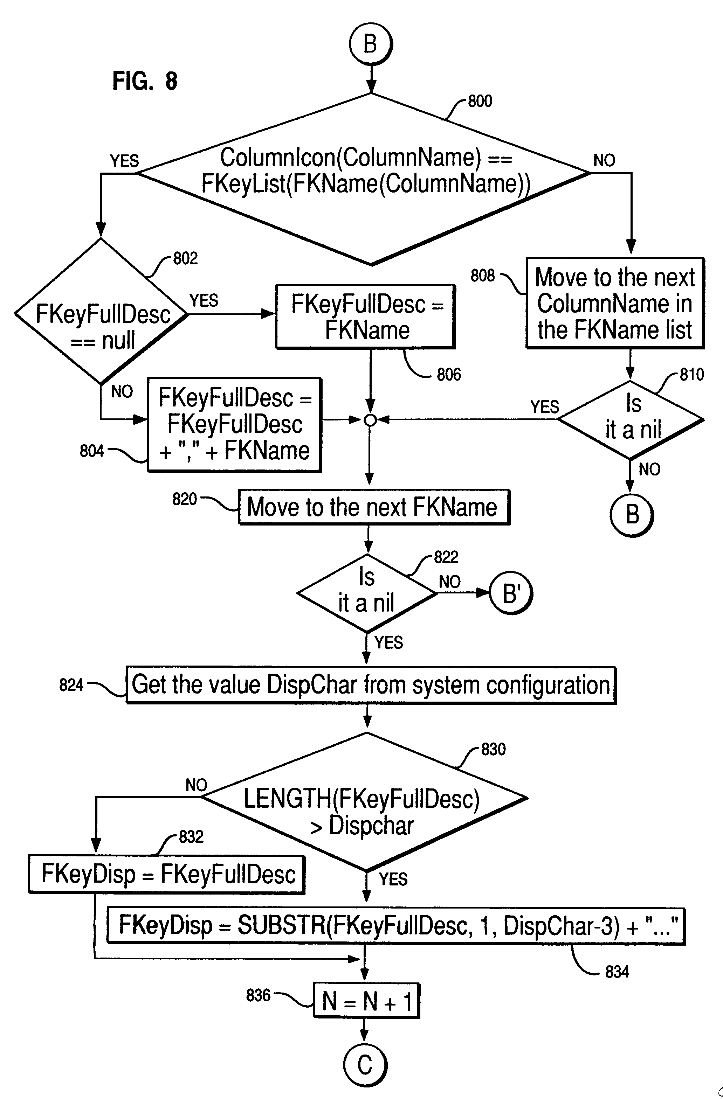

Processing resumes at decision block 800 of Figure 8 where a test is performed to determine if there is a match between the ColumnName in the ColumnIcon and the column name in the foreign key column list. If a match is detected, then another test is performed at decision block 802 to determine if the foreign key full description field is null. If it is null, then the description field is set equal to the foreign key name value at function block 806 and control flows to function block 820. If the value is not null, then the new name is concatenated on to the existing value at function block 804 and control passes to function block 820. If a match is not detected at decision block 800, then the next column name in the FKName list is obtained in function block 808 and a test is performed at decision block 810 to determine if the name is nil. If the name is nil, then control passes to function block 820. If it is not nil, then control passes back to decision block 800 for processing the next foreign key column name.

The next Foreign Key name is obtained at function block 820 and a test is performed at decision block 822 to determine if its value is nil. If the value is not nil, then control passes to label 738 of Figure 7. If the value is nil, then the value of the display character length is obtained from the system configuration module at function block 824 and a test is performed at decision block 830 to determine if the length of foreign key description information will exceed the maximum number of characters that can be displayed. Based on the test, either the full string is selected as in function block 832 or the string is truncated and ellipses are added as in function block 834. Then, control passes to function block 836 where the index N is incremented. Control passes to label 612 in Figure 6.

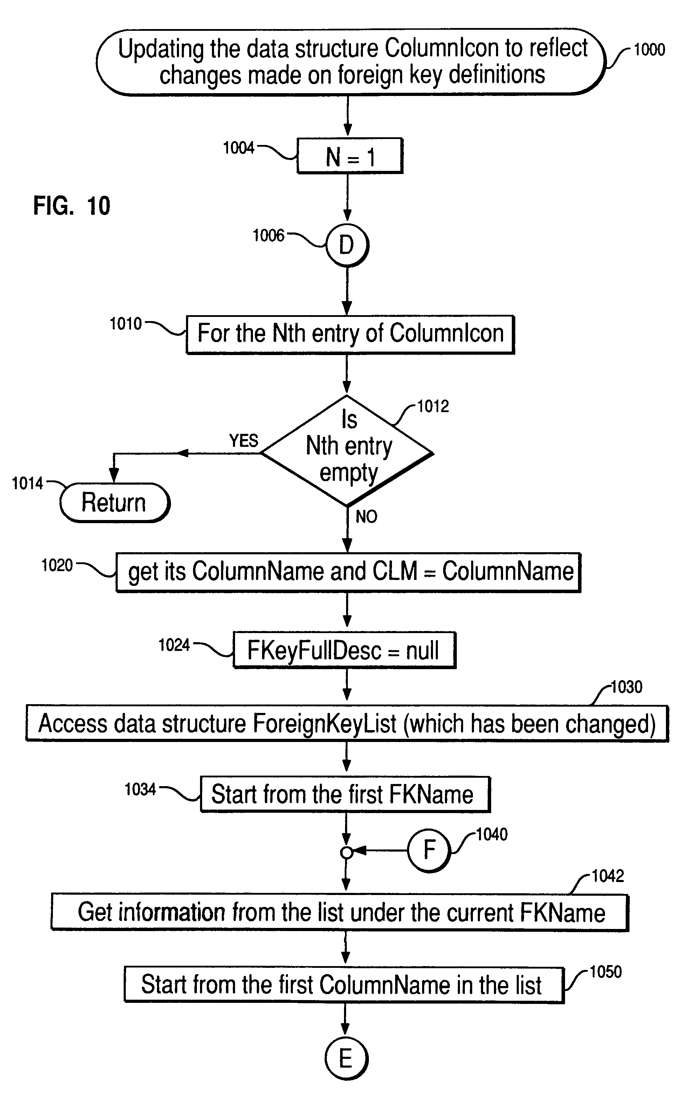

Figure 9 illustrates additional logic used in the embodiment being described. Control commences at function block 900 where the column icon is displayed using the information in the data structure ColumnIcon. The column icon is built by retrieving information from an entry in the column icon data structure as set forth in function block 910, determining the display locations for each piece of information on the icon as set forth in function block 920 and displaying the icon for the particular column with the information as set forth in function block 930. Thereafter control returns to the calling application as shown with terminal 940. Building the ColumnIcon data structure occurs before the ColumnIcon is displayed by the application.

When a user changes a foreign key definition in the application that included the column icon, the logic in Figure 10 is used to update the icon contents. Control commences at 1000, and, immediately, an index N is reset at function block 1004 and a label is hung at 1006. Then for the Nth entry of the ColumnIcon data structure, a test is performed at 1012 to determine if the entry is empty. If it is empty, then control is returned to the calling application at terminal 1014. If it is not empty, then its ColumnName is retrieved and stored as shown in function block 1020 and the foreign key description field is set equal to a null value as shown in function block 1024. Then, at function block 1030, the ForeignKeyList data structure is accessed and the first foreign key name is obtained as set forth in function block 1034. A label is hung at 1040 before the information from the chained list under the current foreign key name is obtained at function block 1042 and the first column name is obtained as shown in function block 1050.

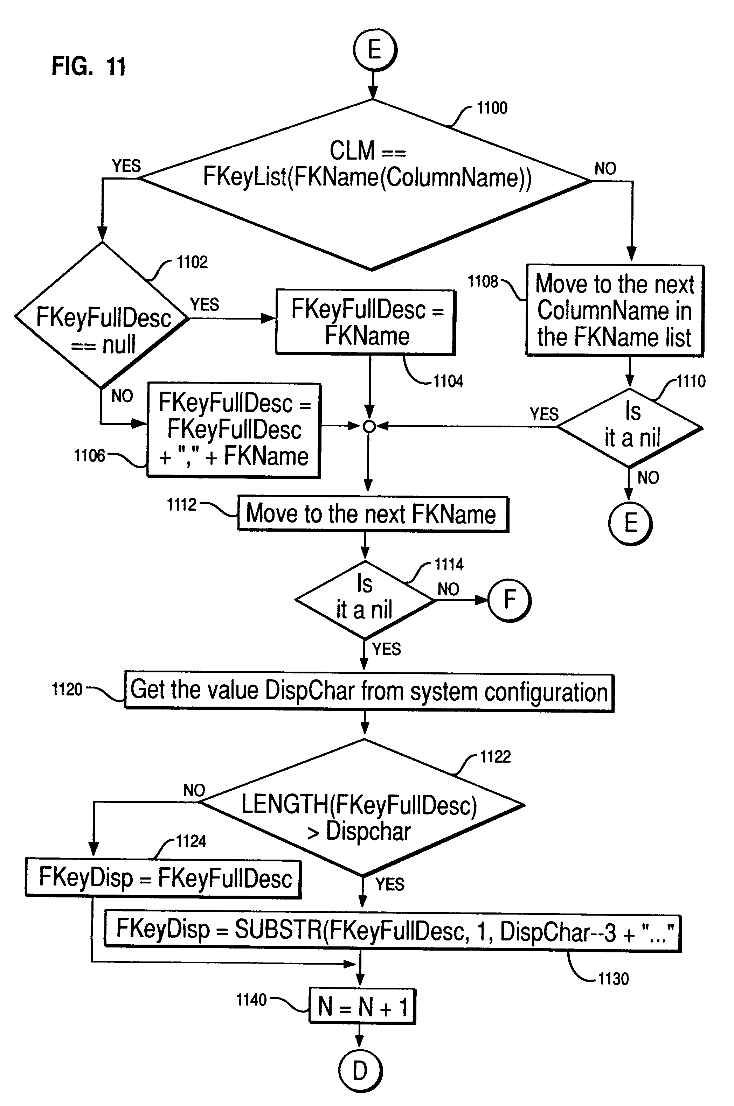

Processing resumes at decision block 1100 of Figure 11 where a test is performed to determine if there is a match between the ColumnName in the ColumnIcon data structure and the column name in the foreign key column list. If a match is detected, then another test is performed at decision block 1102 to determine if the foreign key full description field is null. If it is null, then the description field is set equal to the foreign key name value at function block 1106 and control flows to function block 1112. If the value is not null, then the new name is concatenated on to the existing value at function block 1104 and control passes to function block 1112. If a match is not detected at decision block 1100, then the next column name in the FKName list is obtained in function block 1108 and a test is performed at decision block 1110 to determine if the name is nil. If the name is nil, then control passes to function block 1112. If it is not nil, then control passes back to decision block 1100 for processing the next foreign key column name.

The next Foreign Key name is obtained at function block 1112 and a test is performed at decision block 1114 to determine if its value is nil. If the value is not nil, then control passes to label 1040 of Figure 10. If the value is nil, then the value of the display character length is obtained from the system configuration module at function block 1120 and a test is performed at decision block 1122 to determine if the length of foreign key description information exceeds the maximum number of characters that can be displayed. Based on the test, either the full string is selected as in function block 1124 or the string is truncated and ellipses are added as in function block 1130. Then, control passes to function block 1140 where the index N is incremented and control is passed back to label 1006 of Figure 10.

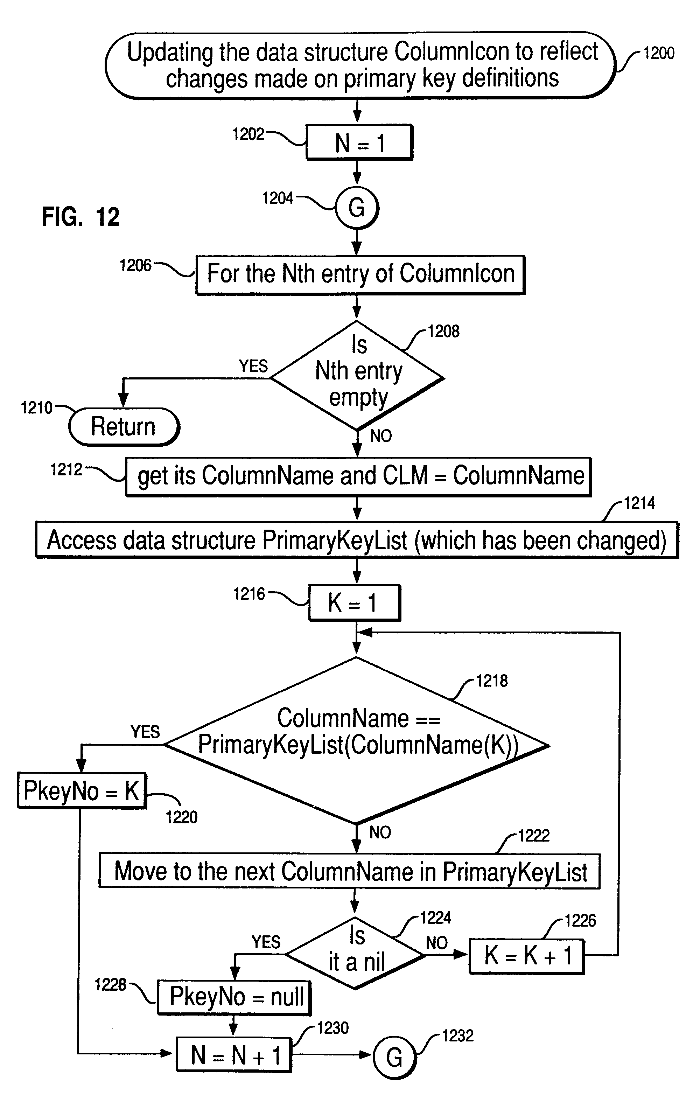

Figure 12 commences with an overview functional block 1200 describing the logic to follow and directly flows to function block 1202 where index N is initialised. A label 1204 is next followed by a retrieval of the Nth entry in the ColumnIcon data structure as illustrated by function block 1206. Thereafter, a test is immediately performed to determine if the Nth entry is empty at decision block 1208. If empty, then control returns to the application at terminal 1210. If not empty, then the column name is stored in the entry at function block 1212, the new primary key list data structure is got in function block 1214, and a second index K is initialised at function block 1216.

Decision block 1218 determines if the column name matches the case entry of the column of the primary key column list. If a match is detected, then the column's primary key sequence number is set equal to the index K at function block 1220 and control passes to function block 1230. If a match is not detected, then the next column name is obtained from the PrimaryKeyList data structure at function block 1222. If the next column name is nil at decision block 1224, then the column's primary key sequence number is set to null at function block 1228, index N is incremented at function block 1230, and control passes to label 1204. If it is not nil, then index K is incremented at function block 1226, and control passes to decision block 1218.

## Claims

1. Apparatus for displaying information contained in a data base comprising
storage means (20) for storing said data base information,
display apparatus (38) for displaying icons relating to said data base, and
a control system (10, 14, 16) for controlling the display of icons on said display apparatus,
characterised in that said
control system comprises means for constructing an icon (200) representing a selected item of data stored in said storage means and representing certain attributes (210 - 224) of said selected data, and
means (36, 38) for displaying said constructed icon.

2. Apparatus as claimed in Claim 1 characterised in that said control system comprises means for modifying a selected item of data by accessing said item of data through the constructed icon representing said item of data.

3. Apparatus as claimed in either of the preceding claims characterised in that said control system comprises means for changing the constructed icon representing a selected item of data in accordance with changes to said item which have occurred due to use of said data base.
